# EUROPEAN PATENT APPLICATION

(11) **EP 4 830 826 A1**
(43) Date of publication of application: **28.10.2026**
(21) Application number: 23962034.7
(22) Date of filing: 23.12.2023
(51) Int. Cl.: B01J 8/24

(54) **HIGH-DENSITY FAST FLUIDIZED BED REACTOR, AND METHANOL TO OLEFINS DEVICE AND METHOD**

(30) Priority: 18.12.2023 CN 202311743533
(71) Applicant: Dalian Institute Of Chemical Physics, Chinese Academy Of Sciences, Liaoning 116023 (CN)
(72) Inventor: ZHANG, Tao, Dalian, Liaoning 116023 (CN); YE, Mao, Dalian, Liaoning 116023 (CN); ZHANG, Jinling, Dalian, Liaoning 116023 (CN); ZHANG, Cheng, Dalian, Liaoning 116023 (CN); TANG, Hailong, Dalian, Liaoning 116023 (CN); XU, Shuliang, Dalian, Liaoning 116023 (CN); WANG, Jing, Dalian, Liaoning 116023 (CN); JIA, Jinming, Dalian, Liaoning 116023 (CN); MA, Xiangang, Dalian, Liaoning 116023 (CN); WANG, Xiangao, Dalian, Liaoning 116023 (CN); LIU, Zhongmin, Dalian, Liaoning 116023 (CN)
(74) Representative: Barker Brettell LLP
(86) International application number: PCT/CN2023/141301
(87) International publication number: WO 2025/129712

(57) **Abstract**

A high-density fast fluidized bed reactor, and a methanol to olefins device and method. The device comprises a high-density fast fluidized bed reactor and a fluidized bed regenerator. In the high-density fast fluidized bed reactor, the circulation intensity of a catalyst flowing to a reaction zone through a catalyst residence zone is as high as 500-1,000 kg/(m²·s), thereby increasing the bed density of the reaction zone, and achieving high bed density under a high superficial linear velocity condition. In the method, methanol or dimethyl ether or a mixture of methanol and dimethyl ether is used as a raw material to produce ethylene, propylene and butene. The production of propylene and butene can be increased by recycling ethylene, and the production of butene can be increased by recycling propylene, thereby achieving flexible adjustment of the distribution of ethylene, propylene and butene. The sum of the contents of ethylene, propylene and butene in the product is greater than or equal to 90 %wt, and the potential content of α-butene in the product can reach up to 57 %wt.

## Description

### TECHNICAL FIELD

The present application relates to the field of chemical engineering technology, and in particular to a high-density fast fluidized bed reactor, a methanol to olefins device and method.

### BACKGROUND

Olefins are important basic organic chemical raw materials and the cornerstone of modern chemical industry. Traditional production technologies are heavily dependent on petroleum resources. Therefore, utilizing China's relatively abundant coal resources to replace petroleum resources is of great strategic significance.

Olefin production technology routes mainly include naphtha cracking to olefins, methanol to olefins, propane dehydrogenation to propylene, and alkane cracking to olefins. Light olefins are very active and prone to polymerization, alkylation, aromatization and other reactions, generating by-products and reducing the yield of light olefins.

Methanol to olefins (MTO) technology targets ethylene and propylene as products. Under the action of molecular sieve catalysts, methanol is converted into a mixture containing components such as ethylene, propylene, butene, pentene, and alkanes. In 2010, the Shenhua Baotou methanol to olefins plant using the DMTO technology developed by the Dalian Institute of Chemical Physics, Chinese Academy of Sciences, was completed and put into operation. This was the first global industrial application of MTO technology. As of 2023, 16 DMTO industrial units have been put into operation, with a total light olefin production capacity of approximately 9.3 million tons/year. Taking DMTO technology as an example, the carbon-based selectivity of ethylene and propylene is approximately 80 %wt, and the selectivity of butene and pentene is approximately 15 %wt.

In recent years, with the development of the high-end polyolefin industry, the demand for α-butene has increased rapidly year by year. Flexibly controlling the product distribution of methanol to olefins technology and increasing the production of α-butene has become a new market demand.

### SUMMARY

In view of this, the present application provides a high-density fast fluidized bed reactor, a methanol to olefins device and method, with the main objective of solving the technical problem of low α-butene production in methanol to olefins.

Methanol to olefins technology uses SAPO molecular sieve catalysts. The hydrocarbon pool mechanism suggests that methanol is converted into products such as ethylene and propylene through aromatic cycles or olefin cycles in the molecular sieve catalyst.

The main reactions include:

CH₃OH → C₂H₄ + C₃H₆ (1)

C₂H₄ + CH₃OH → C₃H₆ (2)

C₃H₆ + CH₃OH → C₄H₈ (3)

C₄H₈ + CH₃OH → C₅H₁₀ (4)

Reactions (1) and (2) generate ethylene and propylene. Reactions (2), (3), and (4) show that small molecular olefins are relatively active and can further increase the number of carbon atoms in the molecule through alkylation reactions, converting into olefin molecules with larger carbon numbers.

SAPO molecular sieve catalysts are shape-selective catalysts, and the olefin molecules in methanol to olefins products are mainly linear olefin molecules. Among them, the content of 1-butene (α-butene) and 2-butene in butene is greater than 95%, and 2-butene can be converted to 1-butene through isomerization technology. Therefore, the potential content of α-butene (1-butene and 2-butene) in the butene product of methanol to olefins technology is as high as 95%.

Methanol to olefins technology uses fluidized bed reactors. Increasing the production capacity of a single reactor is one of the core objectives in developing methanol to olefins reactors. An effective method to increase the production capacity of a single reactor is to increase the superficial gas velocity of the fluidized bed reactor to achieve the purpose of increasing the raw material feed rate. However, increasing the superficial gas velocity usually causes the bed density in the reaction zone of the fluidized bed reactor to decrease significantly, and the catalyst inventory also decreases significantly, leading to a decrease in methanol conversion rate. That is, there is a negative correlation between the raw material feed rate and the bed density in the reaction zone of the fluidized bed.
In order to increase the production of α-butene, on one hand, the present application provides a high-density fast fluidized bed reactor; the high-density fast fluidized bed reactor includes a reactor outer shell, a reactor inner shell, and a conveying pipe;
The high-density fast fluidized bed reactor includes a reactor outer shell, a reactor inner shell, a conveying pipe, and a reactor heat exchanger;
The reactor outer shell is provided with at least a raw material inlet, a catalyst inlet, a gas-phase product outlet, and a catalyst outlet;
The reactor outer shell encloses an internal region;
The reactor inner shell is located in the lower part of the internal region, and the region enclosed by the reactor inner shell is a reaction zone;
The conveying pipe is located in the middle and upper part of the internal region, and the bottom of the conveying pipe is connected to the reaction zone;
The region enclosed by the reactor outer shell and the conveying pipe is a gas-solid separation zone;
The conveying pipe is provided with an outlet, and the conveying pipe is connected to the gas-solid separation zone;
The annular region enclosed by the reactor outer shell and the reactor inner shell is a catalyst residence zone;
The bottom of the reaction zone is connected to the bottom of the catalyst residence zone; The catalyst residence zone is connected to the gas-solid separation zone and is located below the gas-solid separation zone;
The reactor heat exchanger is located in the catalyst residence zone.

Optionally, the high-density fast fluidized bed reactor includes a catalyst distribution pipe, a fluidizing steam distributor, and a raw material distributor;
The catalyst distribution pipe passes through the reactor inner shell to connect the catalyst residence zone and the reaction zone;
The fluidizing steam distributor is provided at the bottom of the catalyst residence zone; The raw material distributor is provided at the bottom of the reaction zone.

Optionally, the lower surface of the catalyst distribution pipe is provided with through holes.

Optionally, the high-density fast fluidized bed reactor includes a first gas-solid separation device and a second gas-solid separation device;
The first gas-solid separation device and the second gas-solid separation device are located in the gas-solid separation zone;
The inlet of the first gas-solid separation device is connected to the outlet of the conveying pipe;
The catalyst outlet of the first gas-solid separation device is located in the lower part of the gas-solid separation zone, and the gas outlet of the first gas-solid separation device is located in the upper part of the gas-solid separation zone.

Optionally, the inlet of the second gas-solid separation device is located in the upper part of the gas-solid separation zone.

The catalyst outlet of the second gas-solid separation device is located in the lower part of the gas-solid separation zone.

Optionally, the first gas-solid separation device is selected from an inertial separator.

Optionally, the second gas-solid separation device is selected from one or more groups of gas-solid cyclone separators, each group of gas-solid cyclone separators including one first-stage gas-solid cyclone separator and one second-stage gas-solid cyclone separator.

Optionally, the high-density fast fluidized bed reactor includes a reactor gas collection chamber and a product gas conveying pipe;
The reactor gas collection chamber is located at the top of the high-density fast fluidized bed reactor;
The product gas conveying pipe is connected to the top of the reactor gas collection chamber;
The gas outlet of the second gas-solid separation device is connected to the reactor gas collection chamber.

The high-density fast fluidized bed reactor of the present application mainly includes a reaction zone, a catalyst residence zone, and a gas-solid separation zone. The catalyst circulation intensity flowing from the catalyst residence zone to the reaction zone is as high as 500-1000 kg/(m²·s), thereby increasing the bed density in the reaction zone and achieving high bed density under high superficial gas velocity conditions, overcoming the negative correlation between the raw material feed rate and the bed density in the reaction zone of the fluidized bed.

In a second aspect, the present application provides a methanol to olefins device, the device including the above-mentioned high-density fast fluidized bed reactor and a fluidized bed regenerator;
A catalyst extraction pipe passes through the reactor outer shell, is located in the lower part of the catalyst residence zone, and the catalyst extraction pipe is connected to a reactor stripper;
The inlet of a spent catalyst slide valve is connected to the bottom of the reactor stripper, the outlet of the spent catalyst slide valve is connected to the inlet of a spent catalyst conveying pipe, and the outlet of the spent catalyst conveying pipe is connected to the fluidized bed regenerator;
A regenerator stripper is located at the bottom of the fluidized bed regenerator, and a regenerator heat exchanger is provided in the regenerator stripper; the inlet of a regenerated catalyst slide valve is connected to the bottom of the regenerator stripper, the outlet of the regenerated catalyst slide valve is connected to the inlet of a regenerated catalyst conveying pipe, and the outlet of the regenerated catalyst conveying pipe is connected to the lower part of the gas-solid separation zone of the high-density fast fluidized bed reactor (i.e., the regenerated catalyst returns to the catalyst inlet of the reactor).

Optionally, the fluidized bed regenerator includes a regenerator shell, a regenerator distributor, a third gas-solid separation device, a regenerator gas collection chamber, and a flue gas conveying pipe;
The regenerator distributor is located at the bottom of the fluidized bed regenerator;
The third gas-solid separation device is located in the upper part of the fluidized bed regenerator, the inlet of the third gas-solid separation device is located in the upper part of the fluidized bed regenerator, the gas outlet of the third gas-solid separation device is connected to the regenerator gas collection chamber, the catalyst outlet of the third gas-solid separation device is located in the lower part of the fluidized bed regenerator, the regenerator gas collection chamber is located at the top of the fluidized bed regenerator, and the flue gas conveying pipe is connected to the top of the regenerator gas collection chamber.

Optionally, the inlet pipe of the regenerator stripper penetrates the regenerator shell and opens above the regenerator distributor.

Optionally, the third gas-solid separation device uses one or more groups of gas-solid cyclone separators, each group of gas-solid cyclone separators including one first-stage gas-solid cyclone separator and one second-stage gas-solid cyclone separator.

In a third aspect, the present application provides a method for flexibly controlling the distribution of olefin products, the method being performed using the above-mentioned device.

Optionally, the method includes the following steps:
Gasified raw materials including methanol and/or dimethyl ether are introduced into the reaction zone, contacted with catalyst, and reacted to generate stream I containing product gas and catalyst;
Stream I passes through the conveying pipe, and after gas-solid separation, the catalyst enters the catalyst residence zone, and the product gas after gas-solid separation enters the downstream section;
A portion of the catalyst in the catalyst residence zone enters the reaction zone, and another portion of the catalyst is sent to the fluidized bed regenerator for regeneration, and the regenerated catalyst enters the high-density fast fluidized bed reactor.

Optionally, stream I passes through the conveying pipe and enters the first gas-solid separation device, and the catalyst after the first gas-solid separation enters the catalyst residence zone.

Optionally, steam enters the catalyst residence zone from the fluidizing steam distributor, and the steam carries a portion of the catalyst in the catalyst residence zone into the gas-solid separation zone; the product gas in the gas-solid separation zone and a portion of the catalyst carried by the steam enter the second gas-solid separation device, and after the second gas-solid separation, the gas enters the reactor gas collection chamber, and the separated catalyst returns to the catalyst residence zone.

Optionally, the product gas and steam after the second gas-solid separation enter the downstream section via the product gas conveying pipe; a portion of the catalyst in the catalyst residence zone enters the reaction zone through the catalyst distribution pipe; a portion of the catalyst in the catalyst residence zone enters the bottom of the reaction zone through the bottom of the catalyst residence zone; a portion of the catalyst in the catalyst residence zone enters the reactor stripper through the catalyst extraction pipe.

Optionally, the raw materials include methanol and crude ethylene separated from the product gas, wherein the mass content of ethylene in the crude ethylene is greater than 90%, and the remaining components include at least one of methane, ethane, propane, and propylene.

Optionally, the raw materials include methanol and crude propylene separated from the product gas, wherein the mass content of propylene in the crude propylene is greater than 90%, and the remaining components include at least one of ethane, ethylene, propane, butane, and butene.

By recycling ethylene, the present application can increase the production of propylene and butene; by recycling propylene, the production of butene can be increased, achieving flexible adjustment of the distribution of ethylene, propylene, and butene; the potential content of α-butene in the product can reach up to 57 %wt.

Optionally, the catalyst is selected from SAPO molecular sieve catalysts.

Optionally, the process operating conditions of the reaction zone of the high-density fast fluidized bed reactor include:
Gas superficial velocity of 1.5-7.0 m/s, temperature of 350-500°C, pressure of 50-500 kPa, and bed density of 100-500 kg/m³.

Optionally, the gas superficial velocity of the reaction zone is selected from any value or range value between any two of 1.5 m/s, 2 m/s, 2.5 m/s, 3 m/s, 3.5 m/s, 4 m/s, 4.5 m/s, 5 m/s, 5.5 m/s, 6 m/s, 6.5 m/s, and 7 m/s.

Optionally, the temperature of the reaction zone is selected from any value or range value between any two of 350°C, 380°C, 400°C, 420°C, 450°C, 480°C, and 500°C. Optionally, the pressure of the reaction zone is selected from any value or range value between any two of 50 kPa, 100 kPa, 150 kPa, 200 kPa, 250 kPa, 300 kPa, 350 kPa, 400 kPa, 450 kPa, and 500 kPa.

Optionally, the bed density of the reaction zone is selected from any value or range value between any two of 100 kg/m³, 150 kg/m³, 200 kg/m³, 250 kg/m³, 300 kg/m³, 350 kg/m³, 400 kg/m³, 450 kg/m³, 500 kg/m³.

Optionally, the process operating conditions of the catalyst residence zone include:
Gas superficial velocity of 0.02-0.2 m/s, temperature of 350-500°C, and bed density of 500-800 kg/m³.

Optionally, the gas superficial velocity of the catalyst residence zone is selected from any value or range value between any two of 0.02 m/s, 0.05 m/s, 0.08 m/s, 0.1 m/s, 0.12 m/s, 0.15 m/s, 0.18 m/s, and 0.20 m/s.

Optionally, the temperature of the catalyst residence zone is selected from any value or range value between any two of 350°C, 380°C, 400°C, 420°C, 450°C, 480°C, and 500°C.

Optionally, the bed density of the catalyst residence zone is selected from any value or range value between any two of 500 kg/m³, 550 kg/m³, 600 kg/m³, 650 kg/m³, 700 kg/m³, 750 kg/m³, 800 kg/m³.

Optionally, the catalyst circulation intensity flowing from the catalyst residence zone to the reaction zone is 500-1000 kg/(m²·s).

Optionally, the catalyst circulation intensity is selected from any value or range value between any two of 500, 550, 600, 650, 700, 750, 800, 850, 900, 950, and 1000, in units of kg/(m²·s).

Optionally, the regeneration gas is air or a mixture of air and steam.

The present application provides a specific methanol to olefins device, including: a reactor outer shell, a reactor inner shell, a conveying pipe, a raw material distributor, a first gas-solid separation device, a fluidizing steam distributor, a catalyst distribution pipe, a reactor heat exchanger, a second gas-solid separation device, a reactor gas collection chamber, a product gas conveying pipe, a catalyst extraction pipe, a reactor stripper, a spent catalyst slide valve, and a spent catalyst conveying pipe;
The region enclosed by the reactor inner shell is the reaction zone, the annular region enclosed by the reactor outer shell and the reactor inner shell is the catalyst residence zone, the bottom of the reaction zone is connected to the bottom of the catalyst residence zone, the region enclosed by the reactor outer shell and the conveying pipe is the gas-solid separation zone, the catalyst residence zone is connected to the gas-solid separation zone and is located below the gas-solid separation zone; the raw material distributor is located at the bottom of the reaction zone, the conveying pipe is located in the central region of the middle and upper part of the high-density fast fluidized bed reactor, the bottom end of the conveying pipe is connected to the top of the reaction zone, and the outlet of the conveying pipe is connected to the inlet of the first gas-solid separation device; the first gas-solid separation device is located in the gas-solid separation zone, the catalyst outlet of the first gas-solid separation device is located in the lower part of the gas-solid separation zone, and the gas outlet of the first gas-solid separation device is located in the upper part of the gas-solid separation zone; the fluidizing steam distributor is located at the bottom of the catalyst residence zone; the catalyst distribution pipe passes through the reactor inner shell to connect the catalyst residence zone and the reaction zone, and the lower surface of the catalyst distribution pipe is provided with openings; the reactor heat exchanger is located in the catalyst residence zone; the second gas-solid separation device is located in the gas-solid separation zone, the inlet of the second gas-solid separation device is located in the gas-solid separation zone, the gas outlet of the second gas-solid separation device is connected to the reactor gas collection chamber, and the catalyst outlet of the second gas-solid separation device is located in the lower part of the gas-solid separation zone; the reactor gas collection chamber is located at the top of the high-density fast fluidized bed reactor, and the product gas conveying pipe is connected to the top of the reactor gas collection chamber;
The catalyst extraction pipe passes through the reactor outer shell and is located in the lower part of the catalyst residence zone; the reactor stripper is connected to the catalyst extraction pipe, the inlet of the spent catalyst slide valve is connected to the bottom of the reactor stripper, the outlet of the spent catalyst slide valve is connected to the inlet of the spent catalyst conveying pipe, and the outlet of the spent catalyst conveying pipe is connected to the fluidized bed regenerator;
The first gas-solid separation device uses an inertial separator to achieve rapid separation of product gas and catalyst; the second gas-solid separation device uses one or more groups of gas-solid cyclone separators, each group of gas-solid cyclone separators including one first-stage gas-solid cyclone separator and one second-stage gas-solid cyclone separator; The fluidized bed regenerator for regenerating catalyst includes: a regenerator shell, a regenerator distributor, a third gas-solid separation device, a regenerator gas collection chamber, a flue gas conveying pipe, a regenerator stripper, a regenerator heat exchanger, a regenerated catalyst slide valve, and a regenerated catalyst conveying pipe;
The regenerator distributor is located at the bottom of the fluidized bed regenerator, the third gas-solid separation device is located in the upper part of the fluidized bed regenerator, the inlet of the third gas-solid separation device is located in the upper part of the fluidized bed regenerator, the gas outlet of the third gas-solid separation device is connected to the regenerator gas collection chamber, the catalyst outlet of the third gas-solid separation device is located in the lower part of the fluidized bed regenerator, the regenerator gas collection chamber is located at the top of the fluidized bed regenerator, and the flue gas conveying pipe is connected to the top of the regenerator gas collection chamber;
The regenerator stripper is located outside the regenerator shell, the inlet pipe of the regenerator stripper penetrates the regenerator shell and opens above the regenerator distributor; the regenerator heat exchanger is located in the regenerator stripper, the inlet of the regenerated catalyst slide valve is connected to the bottom of the regenerator stripper, the outlet of the regenerated catalyst slide valve is connected to the inlet of the regenerated catalyst conveying pipe, and the outlet of the regenerated catalyst conveying pipe is connected to the lower part of the gas-solid separation zone of the high-density fast fluidized bed reactor;
The third gas-solid separation device uses one or more groups of gas-solid cyclone separators, each group of gas-solid cyclone separators including one first-stage gas-solid cyclone separator and one second-stage gas-solid cyclone separator.

The present application provides a specific method for flexibly controlling the distribution of olefin products, including:
a. Catalyst from the regenerated catalyst conveying pipe enters the gas-solid separation zone of the high-density fast fluidized bed reactor and then enters the catalyst residence zone; gasified raw materials enter the reaction zone from the raw material distributor, contact with catalyst, and generate product gas containing olefins. The product gas carries catalyst through the conveying pipe into the first gas-solid separation device. After gas-solid separation, the catalyst enters the catalyst residence zone; steam enters the catalyst residence zone from the fluidizing steam distributor, and the steam carries a small amount of catalyst from the catalyst residence zone into the gas-solid separation zone; the product gas and steam carrying catalyst in the gas-solid separation zone enter the second gas-solid separation device. After gas-solid separation, the gas enters the reactor gas collection chamber, and the catalyst returns to the catalyst residence zone; the product gas and steam enter the downstream section via the product gas conveying pipe; catalyst in the catalyst residence zone enters the reaction zone through the catalyst distribution pipe; catalyst in the catalyst residence zone enters the bottom of the reaction zone through the bottom of the catalyst residence zone; catalyst in the catalyst residence zone enters the reactor stripper through the catalyst extraction pipe. After stripping, the catalyst then enters the middle part of the fluidized bed regenerator via the spent catalyst slide valve and the spent catalyst conveying pipe; the heat released by the reaction is removed by the reactor heat exchanger;
b. Regeneration gas enters the bottom of the fluidized bed regenerator from the regenerator distributor. In the fluidized bed regenerator, the regeneration gas contacts the catalyst, and part of the coke on the catalyst is burned off. The flue gas formed by combustion carries catalyst into the third gas-solid separation device. After gas-solid separation, the flue gas enters the regenerator gas collection chamber and then enters the downstream flue gas treatment system via the flue gas conveying pipe. The catalyst returns to the bottom of the fluidized bed regenerator. The catalyst in the fluidized bed regenerator enters the regenerator stripper. After stripping and heat removal, it then enters the high-density fast fluidized bed reactor via the regenerated catalyst slide valve and the regenerated catalyst conveying pipe;

The raw materials are one of methanol or dimethyl ether, or a mixture of methanol and dimethyl ether; the raw materials are methanol and crude ethylene separated from the product gas, wherein the mass content of ethylene in the crude ethylene is greater than 90%, and other components include methane, ethane, propane, and propylene; the raw materials are methanol and crude propylene separated from the product gas, wherein the mass content of propylene in the crude propylene is greater than 90%, and other components include ethane, ethylene, propane, butane, and butene; the catalyst is a SAPO molecular sieve catalyst;
The process operating conditions of the reaction zone of the high-density fast fluidized bed reactor are: gas superficial velocity of 1.5-7.0 m/s, temperature of 350-500°C, pressure of 50-500 kPa, and bed density of 100-500 kg/m³;
The process operating conditions of the catalyst residence zone are: gas superficial velocity of 0.02-0.2 m/s, temperature of 350-500°C, and bed density of 500-800 kg/m³; the catalyst circulation intensity flowing from the catalyst residence zone to the reaction zone is 500-1000 kg/(m²·s);
The regeneration gas is air or a mixture of air and steam;
The process operating conditions of the fluidized bed regenerator are: gas superficial velocity of 0.5-2.0 m/s, regeneration temperature of 600-750°C, regeneration pressure of 100-500 kPa, and bed density of 150-700 kg/m³.

In the method described in the present application, the product composition does not include water generated from methanol or dimethyl ether.

The C₅+ hydrocarbons described in the present application refer to hydrocarbons with carbon atom numbers greater than or equal to 5.

In the method described in the present application, the potential content of α-butene in the butene product is ≥95 %wt; the potential content of α-butene in the product can reach up to 57 %wt.

In the method described in the present application, the potential content of α-butene in the butene product refers to the content of 1-butene and 2-butene in the butene product, and the potential content of α-butene in the product refers to the content of 1-butene and 2-butene in the product.

Compared with the prior art, the present application has the following beneficial effects:
(1) The present application discloses a high-density fast fluidized bed reactor, which mainly includes a reaction zone, a catalyst residence zone, and a gas-solid separation zone. The catalyst circulation intensity flowing from the catalyst residence zone to the reaction zone is as high as 500-1000 kg/(m²·s), thereby increasing the bed density in the reaction zone and achieving high bed density under high superficial gas velocity conditions, overcoming the negative correlation between the raw material feed rate and the bed density in the reaction zone of the fluidized bed.
(2) The first gas-solid separation device in the high-density fast fluidized bed reactor of the present application uses an inertial separator to achieve rapid separation of product gas and catalyst, significantly shortening the gas-solid contact time and reducing alkanes and C₅+ hydrocarbons in the product.
(3) The methanol to olefins method of the present application can increase the production of propylene and butene by recycling ethylene, and increase the production of butene by recycling propylene, achieving flexible adjustment of the distribution of ethylene, propylene, and butene.
(4) In the methanol to olefins method of the present application, the potential content of α-butene in the product can reach up to 57 %wt.

### BRIEF DESCRIPTION OF THE DRAWINGS

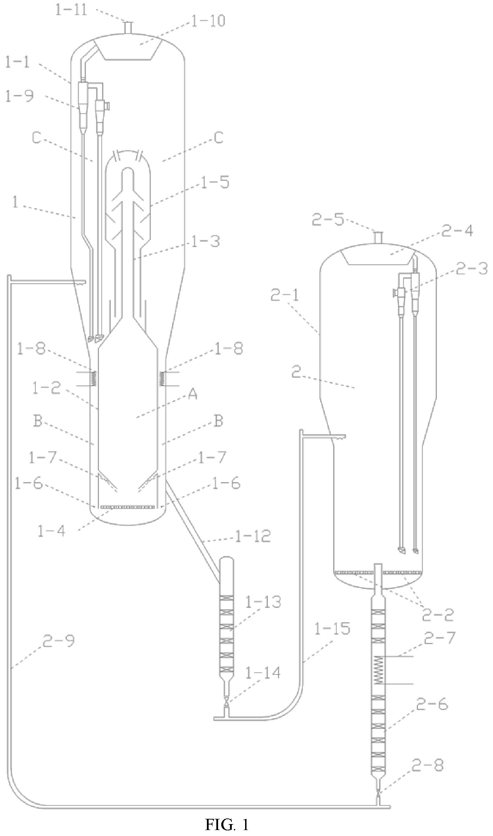

FIG. 1 is a schematic diagram of a device according to one embodiment of the present application.

The reference numerals in FIG. 1 are explained as follows:
1-High-density fast fluidized bed reactor;
   1-1 Reactor outer shell, 1-2 Reactor inner shell, 1-3 Conveying pipe, 1-4 Raw material distributor, 1-5 First gas-solid separation device, 1-6 Fluidizing steam distributor, 1-7 Catalyst distribution pipe, 1-8 Reactor heat exchanger, 1-9 Second gas-solid separation device, 1-10 Reactor gas collection chamber, 1-11 Product gas conveying pipe, 1-12 Catalyst extraction pipe, 1-13 Reactor stripper, 1-14 Spent catalyst slide valve, 1-15 Spent catalyst conveying pipe;
2-Fluidized bed regenerator:
   2-1 Regenerator shell, 2-2 Regenerator distributor, 2-3 Third gas-solid separation device, 2-4 Regenerator gas collection chamber, 2-5 Flue gas conveying pipe, 2-6 Regenerator stripper, 2-7 Regenerator heat exchanger, 2-8 Regenerated catalyst slide valve, 2-9 Regenerated catalyst conveying pipe.

### DETAILED DESCRIPTION OF THE EMBODIMENTS

The present application is described in detail below in conjunction with embodiments, but the present application is not limited to these embodiments.

Unless otherwise specified, the raw materials and catalysts in the embodiments of the present application are all purchased through commercial channels.

In one specific embodiment, the present application provides a device according to one embodiment, the structural schematic diagram of which is shown in FIG. 1. The device includes a high-density fast fluidized bed reactor (1) and a fluidized bed regenerator (2). a. The high-density fast fluidized bed reactor (1) includes: a reactor outer shell (1-1), a reactor inner shell (1-2), a conveying pipe (1-3), a raw material distributor (1-4), a first gas-solid separation device (1-5), a fluidizing steam distributor (1-6), a catalyst distribution pipe (1-7), a reactor heat exchanger (1-8), a second gas-solid separation device (1-9), a reactor gas collection chamber (1-10), a product gas conveying pipe (1-11), a catalyst extraction pipe (1-12), a reactor stripper (1-13), a spent catalyst slide valve (1-14), and a spent catalyst conveying pipe (1-15); the region enclosed by the reactor inner shell (1-2) is the reaction zone (A), the annular region enclosed by the reactor outer shell (1-1) and the reactor inner shell (1-2) is the catalyst residence zone (B), the bottom of the reaction zone (A) is connected to the bottom of the catalyst residence zone (B), the region enclosed by the reactor outer shell (1-1) and the conveying pipe (1-3) is the gas-solid separation zone (C), the catalyst residence zone (B) is connected to the gas-solid separation zone (C) and is located below the gas-solid separation zone (C); the raw material distributor (1-4) is located at the bottom of the reaction zone (A), the conveying pipe (1-3) is located in the central region of the middle and upper part of the high-density fast fluidized bed reactor, the bottom end of the conveying pipe (1-3) is connected to the top of the reaction zone (A), and the outlet of the conveying pipe (1-3) is connected to the inlet of the first gas-solid separation device (1-5); the first gas-solid separation device (1-5) is located in the gas-solid separation zone (C), the catalyst outlet of the first gas-solid separation device (1-5) is located in the lower part of the gas-solid separation zone (C), and the gas outlet of the first gas-solid separation device (1-5) is located in the upper part of the gas-solid separation zone (C); the fluidizing steam distributor (1-6) is located at the bottom of the catalyst residence zone (B); the catalyst distribution pipe (1-7) passes through the reactor inner shell (1-2) to connect the catalyst residence zone (B) and the reaction zone (A), and the lower surface of the catalyst distribution pipe (1-7) is provided with openings; the reactor heat exchanger (1-8) is located in the catalyst residence zone (B); the second gas-solid separation device (1-9) is located in the gas-solid separation zone (C), the inlet of the second gas-solid separation device (1-9) is located in the gas-solid separation zone (C), the gas outlet of the second gas-solid separation device (1-9) is connected to the reactor gas collection chamber (1-10), and the catalyst outlet of the second gas-solid separation device (1-9) is located in the lower part of the gas-solid separation zone (C); the reactor gas collection chamber (1-10) is located at the top of the high-density fast fluidized bed reactor, and the product gas conveying pipe (1-11) is connected to the top of the reactor gas collection chamber (1-10); the catalyst extraction pipe (1-12) passes through the reactor outer shell (1-1) and is located in the lower part of the catalyst residence zone (B); the reactor stripper (1-13) is connected to the catalyst extraction pipe (1-12), the inlet of the spent catalyst slide valve (1-14) is connected to the bottom of the reactor stripper (1-13), the outlet of the spent catalyst slide valve (1-14) is connected to the inlet of the spent catalyst conveying pipe (1-15), and the outlet of the spent catalyst conveying pipe (1-15) is connected to the fluidized bed regenerator (2). b. The fluidized bed regenerator (2) includes: a regenerator shell (2-1), a regenerator distributor (2-2), a third gas-solid separation device (2-3), a regenerator gas collection chamber (2-4), a flue gas conveying pipe (2-5), a regenerator stripper (2-6), a regenerator heat exchanger (2-7), a regenerated catalyst slide valve (2-8), and a regenerated catalyst conveying pipe (2-9); the regenerator distributor (2-2) is located at the bottom of the fluidized bed regenerator (2), the third gas-solid separation device (2-3) is located in the upper part of the fluidized bed regenerator (2), the inlet of the third gas-solid separation device (2-3) is located in the upper part of the fluidized bed regenerator (2), the gas outlet of the third gas-solid separation device (2-3) is connected to the regenerator gas collection chamber (2-4), the catalyst outlet of the third gas-solid separation device (2-3) is located in the lower part of the fluidized bed regenerator (2), the regenerator gas collection chamber (2-4) is located at the top of the fluidized bed regenerator (2), and the flue gas conveying pipe (2-5) is connected to the top of the regenerator gas collection chamber (2-4); the regenerator stripper (2-6) is located outside the regenerator shell (2-1), the inlet pipe of the regenerator stripper (2-6) penetrates the regenerator shell (2-1) and opens above the regenerator distributor (2-2), the regenerator heat exchanger (2-7) is located in the regenerator stripper (2-6), the inlet of the regenerated catalyst slide valve (2-8) is connected to the bottom of the regenerator stripper (2-6), the outlet of the regenerated catalyst slide valve (2-8) is connected to the inlet of the regenerated catalyst conveying pipe (2-9), and the outlet of the regenerated catalyst conveying pipe (2-9) is connected to the lower part of the gas-solid separation zone (C) of the high-density fast fluidized bed reactor (1).

As a preferred embodiment of the above embodiment, the first gas-solid separation device (1-5) uses an inertial separator to achieve rapid separation of product gas and catalyst.

As a preferred embodiment of the above embodiment, the second gas-solid separation device (1-9) uses one or more groups of gas-solid cyclone separators, each group of gas-solid cyclone separators including one first-stage gas-solid cyclone separator and one second-stage gas-solid cyclone separator.

As a preferred embodiment of the above embodiment, the third gas-solid separation device (2-3) uses one or more groups of gas-solid cyclone separators, each group of gas-solid cyclone separators including one first-stage gas-solid cyclone separator and one second-stage gas-solid cyclone separator.

In one specific embodiment, the present application provides a method for flexibly controlling the distribution of olefin products, including the following steps:
a. Catalyst from the regenerated catalyst conveying pipe (2-9) enters the gas-solid separation zone (C) of the high-density fast fluidized bed reactor (1) and then enters the catalyst residence zone (B); gasified raw materials enter the reaction zone (A) from the raw material distributor (1-4), contact with catalyst, and generate product gas containing olefins. The product gas carries catalyst through the conveying pipe (1-3) into the first gas-solid separation device (1-5). After gas-solid separation, the catalyst enters the catalyst residence zone (B); steam enters the catalyst residence zone (B) from the fluidizing steam distributor (1-6), and the steam carries a small amount of catalyst from the catalyst residence zone (B) into the gas-solid separation zone (C); the product gas and steam carrying catalyst in the gas-solid separation zone (C) enter the second gas-solid separation device (1-9). After gas-solid separation, the gas enters the reactor gas collection chamber (1-10), and the catalyst returns to the catalyst residence zone (B); the product gas and steam enter the downstream section via the product gas conveying pipe (1-11); catalyst in the catalyst residence zone (B) enters the reaction zone (A) through the catalyst distribution pipe (1-7); catalyst in the catalyst residence zone (B) enters the bottom of the reaction zone (A) through the bottom of the catalyst residence zone (B); catalyst in the catalyst residence zone (B) enters the reactor stripper (1-13) through the catalyst extraction pipe (1-12). After stripping, the catalyst then enters the middle part of the fluidized bed regenerator (2) via the spent catalyst slide valve (1-14) and the spent catalyst conveying pipe (1-15); the heat released by the reaction is removed by the reactor heat exchanger (1-8);
b. Regeneration gas enters the bottom of the fluidized bed regenerator (2) from the regenerator distributor (2-2). In the fluidized bed regenerator (2), the regeneration gas contacts the catalyst, and part of the coke on the catalyst is burned off. The flue gas formed by combustion carries catalyst into the third gas-solid separation device (2-3). After gas-solid separation, the flue gas enters the regenerator gas collection chamber (2-4) and then enters the downstream flue gas treatment system via the flue gas conveying pipe (2-5). The catalyst returns to the bottom of the fluidized bed regenerator (2). The catalyst in the fluidized bed regenerator (2) enters the regenerator stripper (2-6). After stripping and heat removal, it then enters the high-density fast fluidized bed reactor (1) via the regenerated catalyst slide valve (2-8) and the regenerated catalyst conveying pipe (2-9).

### Example 1

Example 1 uses the device shown in FIG. 1.

In Example 1, the raw material is methanol; the catalyst is a SAPO molecular sieve catalyst. The process operating conditions of the reaction zone (A) of the high-density fast fluidized bed reactor (1) are: gas superficial velocity of 1.5 m/s, temperature of 450°C, pressure of 500 kPa, and bed density of 500 kg/m³.

The process operating conditions of the catalyst residence zone (B) are: gas superficial velocity of 0.12 m/s, temperature of 450°C, and bed density of 630 kg/m³; the catalyst circulation intensity flowing from the catalyst residence zone (B) to the reaction zone (A) is 500 kg/(m²·s).

The regeneration gas is air. The process operating conditions of the fluidized bed regenerator (2) are: gas superficial velocity of 0.5 m/s, regeneration temperature of 600°C, regeneration pressure of 500 kPa, and bed density of 700 kg/m³.

In Example 1, the product composition is 28 %wt ethylene, 42 %wt propylene, 22 %wt butene, and 8 %wt other components. The other components are methane, ethane, propane, butane, C₅+ hydrocarbons, hydrogen, CO, CO₂, and coke, etc. The sum of the contents of ethylene, propylene, and butene in the product is 92 %wt, and the potential content of α-butene in the product is 21 %wt.

### Example 2

Example 2 uses the device shown in FIG. 1.

In Example 2, the raw material is dimethyl ether; the catalyst is a SAPO molecular sieve catalyst.

The process operating conditions of the reaction zone (A) of the high-density fast fluidized bed reactor (1) are: gas superficial velocity of 3.0 m/s, temperature of 350°C, pressure of 270 kPa, and bed density of 290 kg/m³.

The process operating conditions of the catalyst residence zone (B) are: gas superficial velocity of 0.2 m/s, temperature of 350°C, and bed density of 500 kg/m³. The catalyst circulation intensity flowing from the catalyst residence zone (B) to the reaction zone (A) is 760 kg/(m²·s).

The regeneration gas is a mixture of air and steam. The process operating conditions of the fluidized bed regenerator (2) are: gas superficial velocity of 2.0 m/s, regeneration temperature of 650°C, regeneration pressure of 270 kPa, and bed density of 150 kg/m³. In Example 2, the product composition is 21 %wt ethylene, 46 %wt propylene, 26 %wt butene, and 7 %wt other components. The other components are methane, ethane, propane, butane, C₅+ hydrocarbons, hydrogen, CO, CO₂, and coke, etc. The sum of the contents of ethylene, propylene, and butene in the product is 93 %wt, and the potential content of α-butene in the product is 25 %wt.

### Example 3

Example 3 uses the device shown in FIG. 1.

In Example 3, the raw materials are methanol and crude ethylene separated from the product gas. The mass content of ethylene in the crude ethylene is greater than 90%, and other components include methane, ethane, propane, and propylene.

The catalyst is a SAPO molecular sieve catalyst.

The process operating conditions of the reaction zone (A) of the high-density fast fluidized bed reactor (1) are: gas superficial velocity of 5.0 m/s, temperature of 400°C, pressure of 100 kPa, and bed density of 180 kg/m³.

The process operating conditions of the catalyst residence zone (B) are: gas superficial velocity of 0.09 m/s, temperature of 400°C, and bed density of 730 kg/m³. The catalyst circulation intensity flowing from the catalyst residence zone (B) to the reaction zone (A) is 1000 kg/(m²·s).

The regeneration gas is air. The process operating conditions of the fluidized bed regenerator (2) are: gas superficial velocity of 1.4 m/s, regeneration temperature of 690°C, regeneration pressure of 100 kPa, and bed density of 330 kg/m³.

In Example 3, the product composition is 5 %wt ethylene, 50 %wt propylene, 36 %wt butene, and 9 %wt other components. The other components are methane, ethane, propane, butane, C₅+ hydrocarbons, hydrogen, CO, CO₂, and coke, etc. The sum of the contents of ethylene, propylene, and butene in the product is 91 %wt, and the potential content of α-butene in the product is 34 %wt.

### Example 4

Example 4 uses the device shown in FIG. 1.

In Example 4, the raw materials are methanol and crude propylene separated from the product gas. The mass content of propylene in the crude propylene is greater than 90%, and other components include ethane, ethylene, propane, butane, and butene.

The catalyst is a SAPO molecular sieve catalyst.

The process operating conditions of the reaction zone (A) of the high-density fast fluidized bed reactor (1) are: gas superficial velocity of 7.0 m/s, temperature of 500°C, pressure of 50 kPa, and bed density of 100 kg/m³.

The process operating conditions of the catalyst residence zone (B) are: gas superficial velocity of 0.02 m/s, temperature of 500°C, and bed density of 800 kg/m³. The catalyst circulation intensity flowing from the catalyst residence zone (B) to the reaction zone (A) is 850 kg/(m²·s).

The regeneration gas is air. The process operating conditions of the fluidized bed regenerator (2) are: gas superficial velocity of 0.9 m/s, regeneration temperature of 750°C, regeneration pressure of 50 kPa, and bed density of 480 kg/m³.

In Example 4, the product composition is 22 %wt ethylene, 8 %wt propylene, 60 %wt butene, and 10 %wt other components. The other components are methane, ethane, propane, butane, C₅+ hydrocarbons, hydrogen, CO, CO₂, and coke, etc. The sum of the contents of ethylene, propylene, and butene in the product is 90 %wt, and the potential content of α-butene in the product is 57 %wt.

The above examples are merely few examples of the present application, and do not limit the present application in any form. Although the present application is disclosed as above with preferred examples, the present application is not limited thereto. Some changes or modifications made by any technical personnel familiar with the profession using the technical content disclosed above without departing from the scope of the technical solutions of the present application are equivalent to equivalent implementation cases and fall within the scope of the technical solutions.

## Claims

1. A high-density fast fluidized bed reactor, **characterized in that** the high-density fast fluidized bed reactor comprises a reactor outer shell, a reactor inner shell, a conveying pipe, and a reactor heat exchanger;
the reactor outer shell is provided with at least a raw material inlet, a catalyst inlet, a gas-phase product outlet, and a catalyst outlet;
the reactor outer shell encloses an internal region;
the reactor inner shell is located in the lower part of the internal region, and the region enclosed by the reactor inner shell is a reaction zone;
the conveying pipe is located in the middle and upper part of the internal region, and the bottom of the conveying pipe is connected to the reaction zone;
the region enclosed by the reactor outer shell and the conveying pipe is a gas-solid separation zone;
the conveying pipe is provided with an outlet, and the conveying pipe is connected to the gas-solid separation zone;
the annular region enclosed by the reactor outer shell and the reactor inner shell is a catalyst residence zone;
the bottom of the reaction zone is connected to the bottom of the catalyst residence zone; the catalyst residence zone is connected to the gas-solid separation zone and is located below the gas-solid separation zone;
the reactor heat exchanger is located in the catalyst residence zone.

2. The high-density fast fluidized bed reactor according to claim 1, **characterized in that** the high-density fast fluidized bed reactor comprises a catalyst distribution pipe, a fluidizing steam distributor, and a raw material distributor;
the catalyst distribution pipe passes through the reactor inner shell to connect the catalyst residence zone and the reaction zone;
the fluidizing steam distributor is provided at the bottom of the catalyst residence zone; the raw material distributor is provided at the bottom of the reaction zone.

3. The high-density fast fluidized bed reactor according to claim 2, **characterized in that** the lower surface of the catalyst distribution pipe is provided with through holes.

4. The high-density fast fluidized bed reactor according to any one of claims 1 to 3, **characterized in that** the high-density fast fluidized bed reactor comprises a first gas-solid separation device and a second gas-solid separation device; the first gas-solid separation device and the second gas-solid separation device are located in the gas-solid separation zone; the inlet of the first gas-solid separation device is connected to the outlet of the conveying pipe; the catalyst outlet of the first gas-solid separation device is located in the lower part of the gas-solid separation zone, and the gas outlet of the first gas-solid separation device is located in the upper part of the gas-solid separation zone.

5. The high-density fast fluidized bed reactor according to claim 4, **characterized in that**
the inlet of the second gas-solid separation device is located in the upper part of the gas-solid separation zone;
the catalyst outlet of the second gas-solid separation device is located in the lower part of the gas-solid separation zone.

6. The high-density fast fluidized bed reactor according to claim 4 or 5, **characterized in that** the first gas-solid separation device is selected from an inertial separator;
the second gas-solid separation device is selected from one or more groups of gas-solid cyclone separators, each group of gas-solid cyclone separators comprising one first-stage gas-solid cyclone separator and one second-stage gas-solid cyclone separator.

7. The high-density fast fluidized bed reactor according to any one of claims 1 to 6, **characterized in that** the high-density fast fluidized bed reactor comprises a reactor gas collection chamber and a product gas conveying pipe;
the reactor gas collection chamber is located at the top of the high-density fast fluidized bed reactor;
the product gas conveying pipe is connected to the top of the reactor gas collection chamber;
the gas outlet of the second gas-solid separation device is connected to the reactor gas collection chamber.

8. A methanol to olefins device, **characterized in that** the device comprises the high-density fast fluidized bed reactor according to any one of claims 1 to 7 and a fluidized bed regenerator;
a catalyst extraction pipe passes through the reactor outer shell, is located in the lower part of the catalyst residence zone, and the catalyst extraction pipe is connected to a reactor stripper;
the inlet of a spent catalyst slide valve is connected to the bottom of the reactor stripper, the outlet of the spent catalyst slide valve is connected to the inlet of a spent catalyst conveying pipe, and the outlet of the spent catalyst conveying pipe is connected to the fluidized bed regenerator;
a regenerator stripper is located at the bottom of the fluidized bed regenerator, and a regenerator heat exchanger is provided in the regenerator stripper; the inlet of a regenerated catalyst slide valve is connected to the bottom of the regenerator stripper, the outlet of the regenerated catalyst slide valve is connected to the inlet of a regenerated catalyst conveying pipe, and the outlet of the regenerated catalyst conveying pipe is connected to the lower part of the gas-solid separation zone of the high-density fast fluidized bed reactor.

9. The methanol to olefins device according to claim 8, **characterized in that** the fluidized bed regenerator comprises a regenerator shell, a regenerator distributor, a third gas-solid separation device, a regenerator gas collection chamber, and a flue gas conveying pipe; the regenerator distributor is located at the bottom of the fluidized bed regenerator;
the third gas-solid separation device is located in the upper part of the fluidized bed regenerator, the inlet of the third gas-solid separation device is located in the upper part of the fluidized bed regenerator, the gas outlet of the third gas-solid separation device is connected to the regenerator gas collection chamber, the catalyst outlet of the third gas-solid separation device is located in the lower part of the fluidized bed regenerator, the regenerator gas collection chamber is located at the top of the fluidized bed regenerator, and the flue gas conveying pipe is connected to the top of the regenerator gas collection chamber.

10. The methanol to olefins device according to claim 8 or 9, **characterized in that** the inlet pipe of the regenerator stripper penetrates the regenerator shell and opens above the regenerator distributor.

11. The methanol to olefins device according to claim 9 or 10, **characterized in that** the third gas-solid separation device uses one or more groups of gas-solid cyclone separators, each group of gas-solid cyclone separators comprising one first-stage gas-solid cyclone separator and one second-stage gas-solid cyclone separator.

12. A method for flexibly controlling the distribution of olefin products, **characterized in that** the method is performed using the device according to any one of claims 8 to 11.

13. The method for flexibly controlling the distribution of olefin products according to claim 12, **characterized in that** the method comprises the following steps:
gasified raw materials comprising methanol and/or dimethyl ether are introduced into the reaction zone, contacted with catalyst, and reacted to generate a stream I containing product gas and catalyst;
the stream I passes through the conveying pipe, and after gas-solid separation, the catalyst enters the catalyst residence zone, and the product gas after gas-solid separation enters the downstream section;
a portion of the catalyst in the catalyst residence zone enters the reaction zone, and another portion of the catalyst is sent to the fluidized bed regenerator for regeneration, and the regenerated catalyst enters the high-density fast fluidized bed reactor.

14. The method for flexibly controlling the distribution of olefin products according to claim 13, **characterized in that** the stream I passes through the conveying pipe and enters the first gas-solid separation device, and the catalyst after the first gas-solid separation enters the catalyst residence zone.

15. The method for flexibly controlling the distribution of olefin products according to any one of claims 12 to 14, **characterized in that** steam enters the catalyst residence zone from the fluidizing steam distributor, and the steam carries a portion of the catalyst in the catalyst residence zone into the gas-solid separation zone; the product gas in the gas-solid separation zone and a portion of the catalyst carried by the steam enter the second gas-solid separation device, and after the second gas-solid separation, the gas enters the reactor gas collection chamber, and the separated catalyst returns to the catalyst residence zone.

16. The method for flexibly controlling the distribution of olefin products according to claim 15, **characterized in that** the product gas and steam after the second gas-solid separation enter the downstream section via the product gas conveying pipe; a portion of the catalyst in the catalyst residence zone enters the reaction zone through the catalyst distribution pipe; a portion of the catalyst in the catalyst residence zone enters the bottom of the reaction zone through the bottom of the catalyst residence zone; a portion of the catalyst in the catalyst residence zone enters the reactor stripper through the catalyst extraction pipe.

17. The method for flexibly controlling the distribution of olefin products according to any one of claims 13 to 16, **characterized in that** the raw materials comprise methanol and crude ethylene separated from the product gas, wherein the mass content of ethylene in the crude ethylene is greater than 90%, and the remaining components comprise at least one of methane, ethane, propane, and propylene.

18. The method for flexibly controlling the distribution of olefin products according to any one of claims 13 to 16, **characterized in that** the raw materials comprise methanol and crude propylene separated from the product gas, wherein the mass content of propylene in the crude propylene is greater than 90%, and the remaining components comprise at least one of ethane, ethylene, propane, butane, and butene.

19. The method for flexibly controlling the distribution of olefin products according to any one of claims 13 to 18, **characterized in that** the catalyst is selected from SAPO molecular sieve catalysts.

20. The method for flexibly controlling the distribution of olefin products according to any one of claims 13 to 19, **characterized in that** the process operating conditions of the reaction zone of the high-density fast fluidized bed reactor comprise: gas superficial velocity of 1.5-7.0 m/s, temperature of 350-500°C, pressure of 50-500 kPa, and bed density of 100-500 kg/m³.

21. The method for flexibly controlling the distribution of olefin products according to any one of claims 13 to 20, **characterized in that** the process operating conditions of the catalyst residence zone comprise: gas superficial velocity of 0.02-0.2 m/s, temperature of 350-500°C, and bed density of 500-800 kg/m³.

22. The method for flexibly controlling the distribution of olefin products according to any one of claims 13 to 21, **characterized in that** the catalyst circulation intensity flowing from the catalyst residence zone to the reaction zone is 500-1000 kg/(m²·s).

23. The method for flexibly controlling the distribution of olefin products according to any one of claims 13 to 22, **characterized in that** the regeneration gas is air or a mixture of air and steam.
